# DEMANDE DE BREVET EUROPEEN

(11) **EP 0 753 431 A1**
(43) Date de publication de la demande: **15.01.1997**
(21) Numéro de dépôt: 96401501.0
(22) Date de dépôt: 08.07.1996
(51) Int. Cl.: B60R 7/06, B60R 11/02, A47B 88/04

(54) **Dispositif de rangement d'objet notamment pour véhicule automobile**

(30) Priorité: 12.07.1995 FR 9508461
(71) Demandeur: ECIA - EQUIPEMENTS ET COMPOSANTS POUR L'INDUSTRIE AUTOMOBILE, F-25400 Audincourt (FR)
(72) Inventeur: Hoblingre, André, 90380 Roppe (FR)
(74) Mandataire: Habasque, Etienne Joel Jean-François

(57) **Abrégé**

Ce dispositif comportant un logement (2) dans lequel est disposé un tiroir (3) de réception d'objet, monté déplaçable à coulissement entre une position escamotée dans le logement et une position active en saillie à partir de celui-ci, le logement (2) et le tiroir (3) comportant des moyens complémentaires (5) de guidage des déplacements du tiroir, est caractérisé en ce que les moyens de guidage comprennent en outre au moins un jeu d'organes rotatifs (6,7,8,9,10,11,12,13) porté par l'un des éléments, tiroir ou logement, et en ce que ces organes rotatifs sont disposés de part et d'autre du tiroir (3), reliés l'un à l'autre par des moyens d'asservissement en rotation (18) et adaptés pour coopérer avec des moyens complémentaires (14,15,16,17) de l'autre élément, logement ou tiroir, pour asservir les déplacements des côtés opposés du tiroir dans le logement.

## Description

La présente invention concerne un dispositif de rangement d'objet notamment pour véhicule automobile.

Plus particulièrement, la présente invention concerne un dispositif de rangement qui comporte un logement dans lequel est disposé un tiroir de réception d'objet, monté déplaçable à coulissement entre une position escamotée dans le logement et une position active en saillie à partir de celui-ci, le logement et le tiroir comportant des moyens complémentaires de guidage des déplacements du tiroir.

Dans l'état de la technique, ces moyens de guidage sont par exemple constitués par des parties en saillie de l'un des éléments, tiroir ou logement, adaptés pour coopérer avec des parties en creux complémentaires de l'autre élément, logement ou tiroir, afin de guider les déplacements du tiroir.

On conçoit cependant que ceci présente un certain nombre d'inconvénients notamment au niveau du guidage du tiroir lors de ses déplacements et en particulier lorsque la course de déplacement du tiroir entre sa position escamotée et sa position active est relativement importante.

En effet, plus la course de déplacement du tiroir est importante, plus un guidage correct de celui-ci est difficile à obtenir.

Le but de l'invention et donc de résoudre ces problèmes.

A cet effet, l'invention a pour objet un dispositif de rangement d'objet, notamment pour véhicule automobile, du type comportant un logement dans lequel est disposé un tiroir de réception d'objet, monté déplaçable à coulissement entre une position escamotée dans le logement et une position active en saillie à partir de celui-ci, le logement et le tiroir comportant des moyens complémentaires de guidage des déplacements du tiroir, caractérisé en ce que les moyens de guidage comprennent en outre plusieurs jeux d'organes rotatifs décalés angulairement, et portés chacun par l'un des éléments, tiroir ou logement, et en ce que les organes rotatifs de chaque jeu sont disposés de part et d'autre du tiroir, reliés l'un à l'autre par des moyens d'asservissement en rotation et adaptés pour coopérer avec des moyens complémentaires de l'autre élément, logement ou tiroir, pour asservir les déplacements des côtés opposés du tiroir dans le logement.

Avantageusement, les moyens d'asservissement en rotation comprennent des tiges de liaison et de support des organes rotatifs.

Selon un mode de réalisation, chaque organe rotatif comporte un pignon tandis que chaque moyen complémentaire de guidage comporte une crémaillère correspondante.

L'invention sera mieux comprise à la lecture de la description qui va suivre, donnée uniquement à titre d'exemple et faite en se référant aux dessins annexés, sur lesquels :
- la Fig.l représente une vue en coupe d'un premier mode de réalisation d'un dispositif de rangement d'objet selon l'invention;
- la Fig.2 représente une vue en coupe prise suivant la ligne II-II de la Fig.1;
- la Fig.3 représente une vue analogue à celle de la figure 2 illustrant un second mode de réalisation d'un dispositif de rangement d'objet selon l'invention; et
- la Fig.4 représente une vue schématique illustrant la structure d'un troisième mode de réalisation d'un dispositif de rangement selon l'invention.

On reconnaît sur ces figures, un dispositif de rangement d'objet notamment pour véhicule automobile, désigné par la référence générale 1.

Ce dispositif de rangement comporte de manière classique un logement désigné par la référence générale 2 dans lequel est disposé un tiroir 3 de réception d'objet, tel que par exemple un téléphone 4.

Ce tiroir est monté déplaçable à coulissement dans le logement entre une position escamotée dans celui-ci et une position active en saillie à partir de celui-ci comme cela est illustré.

Par ailleurs, ce logement et ce tiroir sont également munis de moyens complémentaires de guidage des déplacements du tiroir dans le logement.

Ces moyens de guidage sont désignés de façon générale par la référence 5.

Selon l'invention, ces moyens de guidage comprennent en outre au moins un jeu d'organes rotatifs portés par l'un des éléments, tiroir ou logement, ces organes rotatifs étant disposés de part et d'autre du tiroir, reliés l'un à l'autre par des moyens d'asservissement en rotation et adaptés pour coopérer avec des moyens complémentaires de l'autre élément, logement ou tiroir, pour asservir les déplacements des côtés opposés du tiroir dans le logement.

Il va de soi bien entendu que plusieurs jeux d'organes rotatifs décalés angulairement peuvent être prévus.

C'est ainsi par exemple que ces moyens de guidage peuvent comporter deux jeux d'organes rotatifs décalés de 90° l'un par rapport à l'autre.

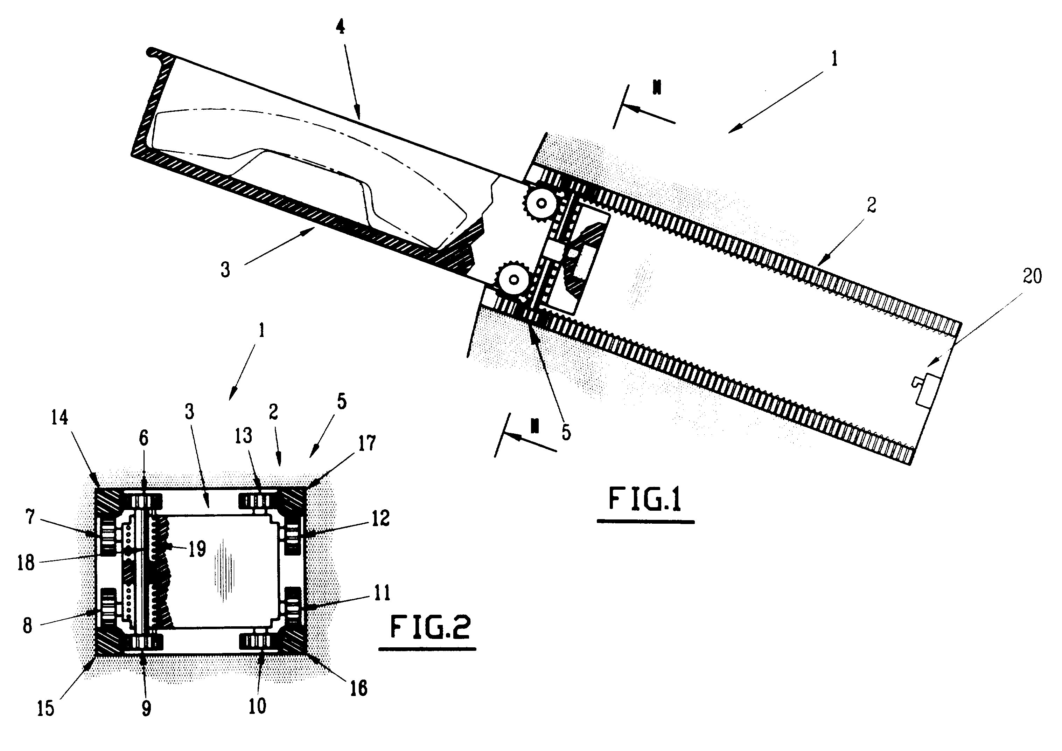

Dans l'exemple de réalisation illustré sur les figures 1 à 3, dans lesquelles des numéros de référence identiques désignent des pièces identiques ou analogues, ces moyens de guidage comportent deux ensembles de deux jeux d'organes rotatifs parallèles entre eux, disposés à 90° les uns par rapport aux autres.

Dans cet exemple de réalisation, ces organes rotatifs sont désignés par les références 6,7,8,9,10,11,12 et 13 respectivement et s'étendent par exemple sur chaque côté du tiroir 3.

Ces organes rotatifs peuvent par exemple être formés par des pignons portés par le tiroir, tandis que les moyens de guidage complémentaires peuvent être formés par des crémaillères reliées au logement.

Sur ces figures, les crémaillères sont formées par des crémaillères doubles disposées dans les coins du logement, adaptées pour coopérer avec deux pignons d'angle du tiroir et sont désignées de façon générale par les références 14,15,16 et 17.

Ces crémaillères comportent donc sur deux faces disposées à 90° l'une par rapport à l'autre, des moyens d'accouplement à crémaillère adaptés pour coopérer avec les pignons correspondants.

Les organes rotatifs de chaque jeu sont donc disposés de part et d'autre du tiroir et sont reliés l'un à l'autre par des moyens d'asservissement en rotation.

C'est ainsi par exemple que les pignons 6 et 9 disposés de part et d'autre du tiroir 3, sont reliés l'un à l'autre et portés par le tiroir, par l'intermédiaire d'une tige de liaison désignée par la référence générale 18, de manière à être asservis en rotation.

Les autres jeux d'organes rotatifs présentent une structure analogue, c'est à dire que les organes rotatifs de chaque jeu sont reliés l'un à l'autre par une tige de liaison analogue à cette tige 18, cette tige permettant également de relier ces organes au tiroir.

On conçoit alors que cette structure de moyens de guidage permet d'asservir les déplacements des côtés opposés du tiroir dans le logement pour éviter tout basculement de celui-ci.

Ceci permet de résoudre les problèmes mentionnés précédemment, de guidage du tiroir sur des courses de déplacement importantes.

De plus, le dispositif de rangement selon l'invention peut également comporter des moyens de sollicitation élastique du tiroir en position active et des moyens de blocage du tiroir en position escamotée dans le logement, actionnables par un utilisateur pour libérer le tiroir et permettre son déplacement vers sa position active.

Des moyens de freinage des déplacements du tiroir peuvent également être utilisés.

Ces différents moyens présentent n'importe quelle structure appropriée bien connue dans l'état de la technique, dans ce type d'applications.

Dans l'exemple de réalisation représenté sur ces figures, les moyens élastiques de sollicitation du tiroir en position active comprennent par exemple au moins un organe se présentant sous la forme d'un ressort associé à au moins l'un des jeux d'organes rotatifs.

C'est ainsi par exemple que le jeu d'organes rotatifs 6 et 9 reliés l'un à l'autre par la tige 18, est associé à un ressort hélicoïdal désigné par la référence générale 19, permettant de solliciter ce tiroir vers sa position active.

Un autre jeu d'organes rotatifs peut quant à lui être associé à des moyens de freinage de type classique constitués par exemple par un autre organe en forme de ressort, un frein à graisse, etc....

Des rondelles de freinage peuvent également être utilisées.

Par ailleurs, les moyens de blocage du tiroir en position escamotée peuvent également présenter n'importe quelle structure connue dans l'état de la technique, comme celle à crochet, désignée par la référence générale 20 sur ces figures, implantée au fond du logement et adaptée pour coopérer avec une butée correspondante du tiroir.

On conçoit alors que si l'on part d'une position telle que celle représentée sur la figure 1, dans laquelle le tiroir est en position active, c'est-à-dire en saillie à partir du logement, lorsque l'utilisateur appuie sur le tiroir pour assurer son escamotage à l'intérieur du logement, il déplace ce tiroir à l'encontre de la sollicitation du ressort 19 associé à l'un des jeux d'organes rotatifs, jusqu'au moment où les moyens à crochet de blocage du tiroir en position escamotée désignés par la référence générale 20, viennent coopérer avec les moyens complémentaires de butée prévus sur le tiroir pour le bloquer en position.

Le ressort 19 est alors bandé.

Lorsque l'utilisateur souhaite faire ressortir le tiroir, il appuie à nouveau sur le tiroir, ce qui provoque de manière classique, l'escamotage du crochet des moyens de blocage 20 et donc la libération du tiroir qui, sous l'action du ressort 19, se déplace vers sa position active.

Les moyens de freinage permettent de freiner les déplacements dans un sens et dans l'autre du tiroir.

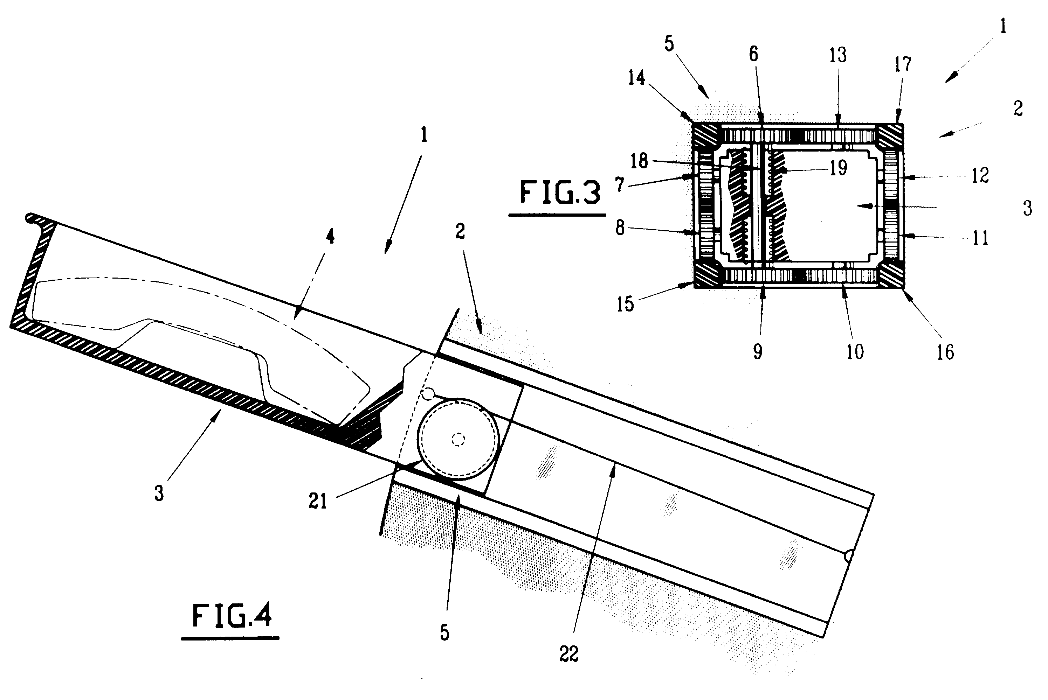

Il va de soi bien entendu que différents modes de réalisation de ce dispositif de rangement peuvent être envisagés comme celui représenté sur la figures 3, dans lequel les pignons disposés sur chaque côté du tiroir sont en appui l'un sur l'autre entre les crémaillères correspondantes, ce qui permet encore d'améliorer le guidage de ce tiroir.

Il va de soi également que des organes rotatifs et des moyens complémentaires autres que des pignons et des crémaillères correspondantes peuvent être utilisés comme cela est illustré sur la figure 4, dans laquelle les organes rotatifs comportent des poulies 21 qui sont adaptées pour coopérer avec des liens souples tels que des câbles 22 dont les extrémités sont fixées sur le logement, ces câbles étant adaptés pour s'enrouler autour des poulies correspondantes pour assurer le guidage et le déplacement du tiroir dans le logement.

Bien entendu, les organes rotatifs peuvent également être fixés sur le logement tandis que les moyens complémentaires de guidage peuvent être prévus sur le tiroir. On aboutit alors à une structure inverse à celle illustrée.

Un nombre de jeux d'organes rotatifs et de moyens complémentaires de guidage, différent de celui illustré, peut être utilisé.

On notera enfin que le logement peut également se présenter sous la forme d'une cassette adaptée pour être engagée dans un évidement d'une pièce de structure de véhicule telle que par exemple la planche de bord de celui-ci.

Il va de soi bien entendu que d'autres modes de réalisation de ce dispositif peuvent être envisagés.

Ainsi par exemple, dans les cas illustrés, le tiroir se déplace selon un mouvement rectiligne mais il va de soi bien entendu qu'un mouvement curviligne de ce tiroir peut également être envisagé.

## Revendications

1. Dispositif de rangement d'objet, notamment pour véhicule automobile, du type comportant un logement (2) dans lequel est disposé un tiroir (3) de réception d'objet, monté déplaçable à coulissement entre une position escamotée dans le logement et une position active en saillie à partir de celui-ci, le logement (2) et le tiroir (3) comportant des moyens complémentaires (5) de guidage des déplacements du tiroir, caractérisé en ce que les moyens de guidage comprennent en outre plusieurs jeux d'organes rotatifs (6,7,8,9,10,11,12,13; 21) décalés angulairement, et portés chacun par l'un des éléments, tiroir ou logement, et en ce que les organes rotatifs de chaque jeu sont disposés de part et d'autre du tiroir (3), reliés l'un à l'autre par des moyens d'asservissement en rotation (18) et adaptés pour coopérer avec des moyens complémentaires (14,15,16,17;22) de l'autre élément, logement ou tiroir, pour asservir les déplacements des côtés opposés du tiroir dans le logement.

2. Dispositif selon la revendication 1, caractérisé en ce que les moyens d'asservissement en rotation comprennent des tiges (18) de liaison et de support des organes rotatifs.

3. Dispositif selon la revendication 1 ou 2, caractérisé en ce que les moyens de guidage comprennent deux ensembles décalés de 90° de deux jeux d'organes rotatifs, parallèles entre eux.

4. Dispositif selon l'une quelconque des revendications précédentes, caractérisé en ce que chaque organe rotatif (6,7,8,9,10,11,12,13) comporte un pignon tandis que chaque moyen complémentaire de guidage (15,16,17,18) comporte une crémaillère correspondante.

5. Dispositif selon l'une quelconque des revendications 1 à 3, caractérisé en ce que chaque organe rotatif comporte une poulie (21) tandis que chaque moyen complémentaire de guidage comporte un lien souple (22) enroulé autour de ladite poulie.

6. Dispositif selon l'une quelconque des revendications précédentes, caractérisé en ce que les jeux d'organes rotatifs sont portés par le tiroir (3) tandis que les moyens complémentaires de guidage sont reliés au logement (2).

7. Dispositif selon l'une quelconque des revendications 1 à 5, caractérisé en ce que les jeux d'organes rotatifs sont reliés au logement tandis que les moyens complémentaires de guidage sont portés par le tiroir.

8. Dispositif selon l'une quelconque des revendications précédentes, caractérisé en ce qu'il comporte des moyens (19) de sollicitation élastique du tiroir (3) en position active et des moyens (20) de blocage du tiroir en position escamotée, actionnables par un utilisateur pour libérer le tiroir.

9. Dispositif selon la revendication 8, caractérisé en ce que les moyens élastiques de sollicitation du tiroir comprennent au moins un ressort (19) associé à l'un des jeux d'organes rotatifs.

10. Dispositif selon l'une quelconque des revendications précédentes, caractérisé en ce qu'il comporte des moyens de freinage des déplacements du tiroir dans le logement.

11. Dispositif selon la revendication 10, caractérisé en ce que les moyens de freinage sont associés à au moins l'un des jeux d'organes rotatifs.

12. Dispositif selon l'une quelconque des revendications précédentes, caractérisé en ce que le logement (2) se présente sous la forme d'une cassette adaptée pour être engagée dans un évidement d'une pièce de structure du véhicule.
